# EUROPÄISCHE PATENTANMELDUNG

(11) **EP 3 786 741 A1**
(43) Veröffentlichungstag der Anmeldung: **03.03.2021**
(21) Anmeldenummer: 19194933.8
(22) Anmeldetag: 02.09.2019
(51) Int. Cl.: G05B 19/418, B23P 21/00

(54) **ORTSUNABHÄNGIGE FERTIGUNGSPLATTFORM FÜR DIE HERSTELLUNG VON PRODUKTEN**

(71) Anmelder: Siemens Aktiengesellschaft, 80333 München (DE)
(72) Erfinder: Rother, Hartmut, 92224 Amberg (DE); Barthmann, Peter, 92224 Amberg (DE)

(57) **Zusammenfassung**

Die Erfindung betrifft eine ortsunabhängige Fertigungsplattform für die Herstellung von Produkten mittels eines definierten Fertigungsprozesses mit mindestens einem Funktionssegment (5), einem Rahmengestell (1) sowie einer Steuer- und Auswerteeinheit, welche derart ausgebildet ist, dass sie das Funktionssegment (5) erkennt und den dafür hinterlegten Fertigungsschritt zu einem bestimmten Zeitpunkt des Fertigungsprozesses abruft sowie zwei Verfahren zur Herstellung von Produkten über einen definierten Fertigungsprozess mittels dieser ortsunabhängigen Fertigungsplattform.

## Beschreibung

Die Erfindung betrifft eine ortsunabhängige Fertigungsplattform für die Herstellung von Produkten mittels eines definierten Fertigungsprozesses mit mindestens einem Funktionssegment, einem Rahmengestell sowie einer Steuer- und Auswerteeinheit.

Fertigungsplattformen bzw. Arbeitsstationen, die sowohl vollautomatisiert als auch als Handarbeitsplätze ausgebildet sind, müssen vielschichtigen Anforderungen gerecht werden. Sie sollen sich unter anderem einfach, kostengünstig und in ihrer Funktionsausrichtung völlig flexibel konzipieren und aufbauen lassen. Die Fertigungsplattform muss in ihrer Konzeptionierung so flexibel angelegt sein, dass der Fertigungsprozess für ausgewählte Produkte einfach zu implementieren ist.

Demgemäß besteht die Aufgabe der vorliegenden Erfindung darin, eine hinsichtlich ihres Aufbaukonzepts und ihrer Funktionsausrichtung völlig flexibel zu gestaltende Fertigungsplattform für die Herstellung von Produkten zu schaffen sowie ein Verfahren zur Herstellung von Produkten mittels dieser Fertigungsplattform anzugeben.

Diese Aufgabe wird erfindungsgemäß durch eine ortsunabhängige Fertigungsplattformen nach Anspruch 1 sowie jeweils durch ein Verfahren nach Anspruch 12 und 13 gelöst. Vorteilhafte Aus- und Weiterbildungen, welche einzeln oder in Kombination miteinander eingesetzt werden können, sind der Gegenstand der abhängigen Ansprüche.

Erfindungsgemäß wird diese Aufgabe durch eine ortsunabhängige Fertigungsplattform für die Herstellung von Produkten mittels eines definierten Fertigungsprozesses gelöst mit:
- mindestens einem Funktionssegment, welches derart ausgebildet ist, dass es einen definierten Fertigungsschritt innerhalb eines Herstellungsprozesses für ein Produkt umsetzt;
- mit einem Rahmengestell, am welchem das Funktionssegment positioniert ist und
- mit einer Steuer- und Auswerteeinheit, welche derart ausgebildet ist, dass sie das Funktionssegment erkennt und den dafür hinterlegten Fertigungsschritt zu einem bestimmten Zeitpunkt des Fertigungsprozesses abruft.

Eine ortsunabhängige Fertigungsplattform ist ortsbeweglich und nicht positionsgebundener, fester Bestandteil einer fest installierten Fertigungsstraße.

Der erfindungsgemäßen Fertigungsplattform können zwei unterschiedliche Funktionsprinzipien zu Grunde liegen. Ein Funktionsprinzip kann darin bestehen, dass in dem Moment, in welchem das Funktionssegment mit der Steuer- und Auswerteeinheit verbunden ist, ein Datenpaket vom Funktionssegment an die Steuer- und Auswerteinheit übertragen wird, in welchem die Funktion des Funktionssegments übermittelt wird. Die Steuer- und Auswerteeinheit ordnet daraus im Anschluss einen Fertigungsprozess zu. Das Funktionssegment teilt in diesem Fall der Steuer- und Auswerteeinheit ungefragt mit, welche Funktion es ausübt. Eine andere Funktionsweise besteht darin, dass nach Anschluss aller Funktionssegmente an der Steuer- und Auswerteeinheit, die Steuer- und Auswerteeinheit die einzelnen Funktionssegmente nach ihrer Funktion fragt und aus diesen Informationen einen Fertigungsablauf zuordnet, welcher zuvor in Form eines Parametrisierungsprozesses auf der Steuer- und Auswerteeinheit hinterlegt wurde. Es ist jedoch in beiden Fällen auch möglich, dass die automatische Zuordnung blockiert wird und ein manuell programmierter Fertigungsprozess von der Steuer- und Auswerteeinheit zugeordnet wird.

Der Kern der Erfindung besteht darin, dass der ortsunabhängigen Fertigungsplattform ein modulares Aufbaukonzept zugrunde liegt, welches durch einen einfachen Austausch von Teilbereichen des Rahmengestells bzw. durch einen Austausch der Funktionssegmente auf nahezu jeden Fertigungsprozess anpassbar ist.

Die wesentlichen Elemente der ortsunabhängigen Fertigungsplattform sind das Rahmengestell, die Funktionssegmente und die Steuer- und Auswerteeinheit.

Die erfindungsgemäßen Funktionssegmente können als Roboter oder Handarbeitsplatz oder in einer Kombination dieser beiden Funktionen ausgebildet sein. Der im Funktionssegment hinterlegte Fertigungsschritt kann in Form einer Prüfeinheit, einer Montageeinheit, einer Füge- und Verbindungseinheit, einer Zuführ- oder Wegführeinheit, einer Presseinheit oder Löteinheit oder in einer ausgewählten Kombination dieser Funktionen ausgebildet sein.

Die Funktionssegmente weisen eine universelle Schnittstelle zum Rahmengestell in Form einer Kontaktierung auf, so dass die Funktionssegmente an jeder für die Kontaktierung der Funktionssegmente am Rahmengestell vorgesehenen Position fixiert werden können. Die Funktionssegmente sind in ihrer Positionierung am Rahmengestell ohne Einschränkung flexibel ausgebildet. Diese Schnittstelle kann zudem auch derart ausgeführt sein, dass sie eine Kontaktierung einer Standardmaschine ermöglicht. Für den Fall, dass die Standardmaschine nicht direkt vom Funktionssegment kontaktiert werden kann, weil die Schnittstellen nicht kompatibel sind, kann über einen Adapter eine Verbindung hergestellt werden.

Die Funktionssegmente können manuell, manuell mit einem Wechselwagen, mittels eines fahrerlosen Transportsystems oder mittels eines mobilen, autarken Roboters gewechselt werden. Der Wechsel der Funktionssegmente kann mittels eines pneumatischen oder hydraulischen oder elektromechatronischen Antriebs unterstützt werden.

Das Positionieren der Funktionssegmente kann über unterschiedlich ausgebildete Arretierungseinheiten umgesetzt werden. Die Umsetzung kann über zwei oder vier Passstifte am Funktionssegment und zwei oder vier Pass- oder Kugelbuchsen am Rahmengestell erfolgen oder über zwei Passstifte am Funktionssegment und einer Pass- oder Kugelbuchse und einem Langloch am Rahmengestell oder über zwei Passstifte am Rahmengestell und zwei Langlöcher am Funktionssegment oder über einen Passstift am Rahmengestell und einem Langloch und einer Anschlagfläche am Funktionssegment.

Das Positionieren des Funktionssegments kann aber auch durch Einschieben in eine Flachführung oder mehrere umgesetzt sein oder durch Einschieben über eine Schwalbenschanzführung oder mehrere. Das Funktionssegment kann auch über Spannbacken zentriert und fixiert werden. Die Zentrierung kann horizontal, vertikal oder durch Umgreifen des Rahmengestells ausgebildet sein. Das Funktionssegment kann mittels Schraubanschlüssen positioniert werden oder durch Rastbolzen, einen Bajonettverschluss, durch Kegelbuchsen oder Pilzstifte. Die Anzahl der Zentrier- und Fixiereinheiten kann variieren. Zudem können die Zentrier- und Fixiereinheiten getrennte Vorrichtungen sein.

Das Verriegeln der Funktionssegmente am Rahmengestell kann energielos oder durch manuelle Betätigung erfolgen. Es kann vorgesehen sein, dass beim Einhängen des Funktionssegments die Zentrierung und Verriegelung automatisch durchgeführt wird. Die Funktion des Zentrierens und Verriegelns wird in einem kombinierten Prozessschritt umgesetzt. Ein Funktionssegment hat im freien Raum drei lineare und drei rotatorische Freiheitsgrade (x,y,z, alpha, beta, gamma). Während des Positionierens des Funktionssegments im oder am Gestell werden zwei lineare und drei rotatorische Freiheitsgrade durch die Positionierung fixiert. Der dann noch unbelegte, lineare Freiheitsgrad ist zum Wechseln des Funktionssegments vorgesehen. Durch das Ent- und Verriegeln wird der lineare Freiheitsgrad gelöst oder fixiert. Die Ent- und Verriegelung und Fixierung können durch das Anheben oder Absenken des Rahmengestells erfolgen.

Es kann vorgesehen ein, dass zum Ver- und Entriegeln des Funktionssegments am Rahmengestell je Funktionssegment zwei Buchsen mit Innenrille angeordnet sind und am Funktionssegment zwei Dorne montiert sind. Jeder Dorn enthält drei innenliegende Kugeln und einen Kegeldorn. Wenn das Funktionssegment abgesengt wird, werden die zwei Kegeldorne durch eine Druckfeder weiterbewegt, wodurch sie die Kugeln in die Innenrille der Buchsen drücken. Beim Entriegeln wird das Funktionssegment angehoben, d.h., als erstes wird der Kegeldorn angehoben. Dadurch rollen die Kugeln aus der Innenrille zum Kegeldorn. Auf diese Weise wird das Funktionssegment entriegelt und kann mit einem Hub eines Wechsel- oder Roboterwagens komplett entfernt werden.

Die Funktionssegmente können jeweils mit einem Bewegungswinkel von 4x90°, 2x180° oder 1x360° positioniert werden. Wenn das Funktionssegment eine hexagonale Form aufweist, kann es mit einem Bewegungswinkel von 6x60° am Rahmengestell fixiert werden. Dieses Konzept mit einer n-eckigen Konfiguration kann beliebig erweitert werden (n= 3 bis ∞).

Das Rahmengestell kann aus Aluminium, Stahl, Holz, Kunststoff oder einer ausgewählten Kombination dieser Werkstoffe oder einem kombinierten Materialmix wie einem Verbundmaterial ausgebildet sein. Das Rahmengestell ist vorzugsweise aus einzelnen Holmen aufgebaut, welche zu beliebigen, geometrischen Konfigurationen beispielsweise Quader oder Würfel zusammengesetzt werden können. Diese einzelnen Holme können an eine ihrer Seitenkanten Schnittstellen aufweisen, über welche eine feste Verankerung am Fußboden umzusetzen ist. Die Rahmengestelle können beliebig in Linien oder anderen Konturformen angeordnet sein. Es ist auch nicht zwingend erforderlich, dass die geometrischen Konfigurationen beispielsweise in Form von Quadern oder Würfeln vollständig bzw. komplett ausgebildet sind.

Im Fall einer würfelförmigen Konfiguration können mehrere dieser geometrischen Einheiten in unterschiedlichen Anordnungen 1x1; 1x2; 2x2; 1x3; 2x3 usw. platziert werden. Zudem ist es möglich, dass die daran fixierten Funktionssegmente einen Bewegungswinkel von 4x90° einnehmen können.

Das Rahmengestell kann durch ein flexibles Schutzkonzept erweitert werden. Der gewünschten Anforderung entsprechend, kann am Rahmengestell eine feststehende trennende Schutzvorrichtung, eine komplett oder teileweise berührungslos wirkende Schutzvorrichtung oder eine komplett oder teileweise Schutzraumüberwachung montiert werden.

Die Steuer- und Auswerteeinheit ist vorzugsweise ein Kontroller, in welchem ein Computer implementiert ist oder welcher eine Schnittstelle zu einem Computer oder einem Rechenzentrum oder einer Cloud aufweist. Die Steuer- und Auswerteeinheit kann mit einer Mehrzahl an Datenübertragungsschnittstellen wie z. B. RFID, Bluetooth, Scanner, Sensoren oder Ähnliche ausgebildet sein. Die Steuer- und Auswerteeinheit kann portabel, also ortsbeweglich ausgeführt sein. Zudem kann sie eine Schnittstelle für die Fixierung an einem Rahmengestell oder Funktionssegment aufweisen.

Eine vorteilhafte Ausführungsform der erfindungsgemäßen ortsunabhängigen Fertigungsplattform kann darin bestehen, dass die Steuer - und Auswerteeinheit eine Kommunikationsschnittstelle aufweist, wobei die Kodierung des jeweiligen Funktionssegments mittels eines Kommunikationsprotokolls, welches in der Steuer- und Auswerteeinheit und im jeweiligen Funktionssegment hinterlegt ist, übermittelt wird. Diese Kommunikationsschnittstelle ist vergleichbar mit einer Master-and-Slave-Kommunikation. Die Steuer- und Auswerteeinheit entspricht dem Master, die Funktionssegmente sind die Slaves. Die Funktionssegmente können ungefragt ihre Funktion der Steuer- und Auswerteeinheit mitteilen, oder sie werden von der Steuer- und Auswerteeinheit abgefragt.

Es entspricht einer speziellen Ausführungsform der erfindungsgemäßen ortsunabhängigen Fertigungsplattform, dass die Steuer- und Auswerteeinheit eine Datenübertragungsschnittstelle aufweist, welche in Form eines optischen 2D- oder 3D-Sensors mit anschließender Datenübertragung ausgebildet ist, oder welche in Form einer Bluetooth-Schnittstelle ausgebildet ist, oder welche in Form einer RFID-Schnittstelle ausgebildet ist, oder welche in Form eines Scanners, welcher einen Code am Funktionssegment liest, mit anschließender Datenübertragung ausgebildet ist, oder welche in Form einer kodierten Kontaktierung an der Schnittstelle zwischen Funktionssegment und Steuer- und Auswerteeinheit mit anschließender Datenübertragung ausgebildet ist.

Eine kodierte Kontaktierung kann beispielsweise in Form zweier Stecker jeweils mit einer Mehrzahl an Pins für das anzuschließende Funktionssegment und für die Steuer- und Auswerteeinheit ausgebildet sein. An der Steuer- und Auswerteeinheit ist eine Art Generalstecker angeschlossen, welcher für alle möglichen Pinkombinationen einen Gegenpin aufweist. Am Funktionssegment ist eine Anordnung einer Mehrzahl an Pins ausgebildet. Die Anordnung der Pins am Funktionssegment beinhaltet die Kodierung der Funktion.

Für die Erkennung mittels RFID sendet das Funktionssegment elektromagnetische Wellen aus, welche zum automatischen und berührungslosen Identifizieren und Lokalisieren von Objekten im Radiowellenbereich geeignet sind. Die Bluetooth-Schnittstelle ermöglicht eine Kommunikation zwischen Funktionssegment und Steuer- und Auswerteeinheit mittels kabelloser Funktechnik (WPAN).

Die übermittelten Daten werden von der Steuer- und Auswerteeinheit analysiert, welche im Anschluss einen Fertigungsprozess zuordnet.

Eine Fortführung des Konzepts für die erfindungsgemäße ortsunabhängige Fertigungsplattform kann darin bestehen, dass die ortsunabhängige Fertigungsplattform derart mit Funktionssegmenten bestückt ist, dass ein komplett manuell zu betreibender Fertigungsprozess durchzuführen ist oder ein komplett mittels der Steuer- und Auswerteeinheit geführter automatisierter Fertigungsprozess oder ein teilweise manuell und teilweise automatisiert geführter Fertigungsprozess durchzuführen ist.

Eine Erweiterung einer speziellen Ausgestaltung des erfindungsgemäßen Konzepts für die ortsunabhängige Fertigungsplattform kann vorsehen, dass das Rahmengestell aus einzelnen Holmen ausgebildet ist, welche in einem individuell ausgebildeten modularem Aufbaukonzept angeordnet sind, wobei die Holme regelmäßig und unregelmäßig angeordnete Schnittstellen zum Ineinanderfügen aufweisen. An diesen Holmen können Kabelhalter angeordnet sein, so dass auch die mit Kabelanschluss ausgebildeten Datenübertragungsschnittstellen einen geordneten, sicheren und einfach zugänglichen Arbeitsplatz ermöglichen.

Eine vorteilhafte Ausführungsform der erfindungsgemäßen ortsunabhängigen Fertigungsplattform kann darin bestehen, dass die ortsunabhängige Fertigungsplattform als Einzelarbeitsplatz oder in Form einer modular aufgebauten Fertigungsstraße ausgebildet ist. Die Fertigungsstraße kann aus einer Mehrzahl an gleich ausgebildeten Einzelarbeitsplätzen mit einem modularen Aufbau zusammengestellt sein oder eine komplett individuell ausgeführte Fertigungsstraße sein.

Es entspricht einer speziellen Ausführungsform der erfindungsgemäßen ortsunabhängigen Fertigungsplattform, dass der mittels des Funktionssegments auszuführende Fertigungsschritt in Form einer Prüfeinheit, einer Montageeinheit, einer Fügeund Verbindungseinheit, einer Zuführ- oder Wegführeinheit, einer Presseinheit oder Löteinheit oder in einer ausgewählten Kombination dieser Funktionen ausgebildet ist. Das erfindungsgemäße Funktionssegment kann eine Mehrzahl an Funktionen aufweisen.

Eine Fortführung des Konzepts für die erfindungsgemäße ortsunabhängige Fertigungsplattform kann darin bestehen, dass sowohl am Rahmengestell als auch an den jeweiligen Funktionssegmenten Schnittstellen ausgebildet sind, welche derart ausgebildet sind, dass das jeweilige Funktionssegment am Rahmengestell zu befestigen und zu verriegeln ist.

Eine Erweiterung einer speziellen Ausgestaltung des erfindungsgemäßen Konzepts für die ortsunabhängige Fertigungsplattform kann vorsehen, dass die ortsunabhängige Fertigungsplattform entweder eine fest positionierte Schutzeinrichtung aufweist oder Schnittstellen aufweist, um die ortsunabhängige Fertigungsplattform mit einer Schutzeinrichtung zu erweitern.

Eine vorteilhafte Ausführungsform der erfindungsgemäßen ortsunabhängigen Fertigungsplattform kann darin bestehen, dass die jeweiligen Funktionssegmente manuell auszutauschen sind oder eine Schnittstelle aufweisen, um einen automatisierten Austausch durchzuführen. Beispielsweise können die Funktionssegmente auf einer Plattform mit einer definierten Abmessung montiert sein, so dass ein mobiler Transportwagen vorzugsweise mit Greifarmen, welche einen Abstand voneinander mit der definierten Abmessung der Plattform aufweisen, das Funktionssegment automatisiert austauschen kann.

Es entspricht einer speziellen Ausführungsform der erfindungsgemäßen ortsunabhängigen Fertigungsplattform, dass die Steuer- und Auswerteeinheit entweder dezentral an einem Funktionssegment angeordnet ist oder zentral am Rahmengestell der ortsunabhängigen Fertigungsplattform oder übergeordnet weder am Rahmengestell noch an einem Funktionssegment.

Die Aufgabe der vorliegenden Erfindung wird außerdem gelöst durch ein erstes Verfahren zur Herstellung von Produkten über einen definierten Fertigungsprozess mittels einer ortsunabhängigen Fertigungsplattform nach einem der Ansprüche 1 bis 11 mit den Schritten:
- Montage eines Funktionssegments oder einer Mehrzahl an Funktionssegmenten an einem Rahmengestell;
- Übertragung von Informationen zur Kodierung des jeweiligen Funktionssegments an eine Steuer- und Auswerteeinheit;
- Zuordnen der Kodierung des jeweiligen Funktionssegments zu einem definierten Fertigungsschritt durch die Steuer- und Auswerteeinheit;
- Ableiten eines Fertigungsprozesses mittels der zuvor mit Fertigungsprozessen programmierten Steuer- und Auswerteeinheit;
- Ansteuern des jeweiligen Funktionssegments durch die Steuer- und Auswerteeinheit für die Ausführung des Fertigungsprozesses.

Zudem wird die Aufgabe gelöst durch ein zweites Verfahren zur Herstellung von Produkten über einen definierten Fertigungsprozess mittels einer ortsunabhängigen Fertigungsplattform nach einem der Ansprüche 1 bis 11 mit den Schritten:
- Programmieren einer Steuer- und Auswerteeinheit mit einer Mehrzahl an Fertigungsprozessen;
- Abfragen der Funktionen eines angeschlossenen Funktionssegments oder einer Mehrzahl an Funktionssegmenten mittels der Steuer- und Auswerteeinheit;
- Ansteuern des jeweiligen ausgewählten Funktionssegments durch die Steuer- und Auswerteeinheit gemäß dem Fertigungsprozess.

Eine Erweiterung einer speziellen Ausgestaltung der erfindungsgemäßen Verfahren für die Herstellung von Produkten mittels der ortsunabhängigen Fertigungsplattform kann vorsehen, dass das Ermitteln des jeweiligen Funktionssegments mittels eines Kommunikationsprotokolls durchgeführt wird, welches in der Steuer- und Auswerteeinheit und im jeweiligen Funktionssegment hinterlegt ist.

Es entspricht einer speziellen Ausgestaltung der erfindungsgemäßen Verfahren, dass das Ermitteln des jeweiligen Funktionssegments mittels einer Datenübertragungsschnittstelle durchgeführt wird, wobei mittels eines optischen 2D- oder 3D-Sensors Messwerte generiert werden und anschließend an die Steuer- und Auswerteeinheit übertragen und von dieser ausgewertet werden, oder wobei mittels einer Bluetooth-Schnittstelle Messwerte an die Steuer- und Auswerteeinheit übertragen und von dieser ausgewertet werden, oder wobei mittels einer RFID-Schnittstelle Messwerte an die Steuer- und Auswerteeinheit übertragen und von dieser ausgewertet werden, oder wobei mittels eines Scanners Messwerte generiert werden und anschließend an die Steuer- und Auswerteeinheit übertragen und von dieser ausgewertet werden, oder wobei mittels einer kodierten Kontaktierung an der Datenübertragungsschnittstelle Daten generiert werden und anschließend an die Steuer- und Auswerteeinheit übertragen und von dieser ausgewertet werden.

Die erfindungsgemäße ortsunabhängige Fertigungsplattform weist ein Rahmengestell auf, welches aus einer Mehrzahl an Holmen ausgebildet ist, sowie Funktionssegmente, welche am Rahmengestell über eine Schnittstelle zu fixieren und zu verriegeln sind. Der auszuführende Fertigungsprozess wird mittels einer Steuer- und Auswerteeinheit initialisiert, wobei diese Steuer- und Auswerteeinheit zunächst die Informationen in Form von Daten automatisch erhält oder abruft, welche Funktionssegmente für einen auszuführenden Fertigungsprozess angeschlossen sind, um im Anschluss einen manuell programmierten oder einen bereits hinterlegten Fertigungsprozess auszuführen.

Weitere Ausführungen und Vorteile der Erfindung werden nachfolgend anhand von Ausführungsbeispielen sowie anhand der Zeichnung erläutert.

Dabei zeigt:
Fig. 1 in einer perspektivischen Darstellung ein erfindungsgemäßes Rahmengestell;
Fig. 2 in einer perspektivischen Darstellung ein erfindungsgemäßes Funktionssegment;
Fig. 3 in einer perspektivischen Darstellung ein Rahmengestell, welchem zwei unterschiedliche Funktionssegmente zugeführt werden;
Fig. 4 in einer perspektivischen Darstellung ein für einen automatisierten Prozess ausgebildetes Funktionssegment fixiert am Rahmengestell;
Fig. 5 in einer perspektivischen Darstellung ein für einen manuell zu betreibenden Fertigungsschritt ausgebildetes Funktionssegment fixiert am Rahmengestell;
Fig. 6 in einer perspektivischen Darstellung ein mobiler Austausch von Funktionssegmenten mit zwei Rahmengestellen;
Fig. 7 in einer schematischen Darstellung eine Verriegelungsvorrichtung für Funktionssegmente am Rahmengestell;
Fig. 8 in einer perspektivischen Darstellung eine individuell anzupassende Schutzvorrichtung;
Fig. 9 in einer perspektivischen Darstellung eine aus einzelnen, ortsunabhängigen Fertigungsplattformen aufgebaute Fertigungsstraße.

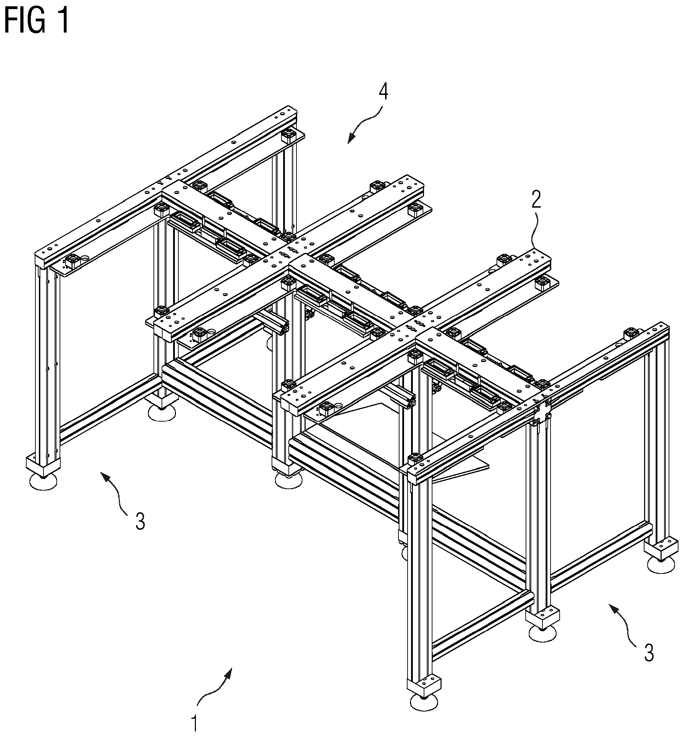

Fig. 1 zeigt ein erfindungsgemäßes Rahmengestell 1, welches aus einzelnen vorzugsweise stegförmigen Holmen 2 zusammengesetzt ist. Vorzugsweise sind die Holme 2 in einem Winkel von 90° zueinander positioniert. Es ist jedoch bei Verwendung eines entsprechenden Verbindungsstücks oder durch beweglich

ausgeführte Endbereiche der Holme 2 jeder andere Winkel zwischen den Holen 2 möglich, so dass auch andere Konfigurationen als Quader und Würfel möglich sind. Die entsprechenden Konfigurationen müssen nicht zwingend vollständig ausgeprägt sein. Wie Fig. 1 zeigt, kann die entsprechende Konfiguration beispielsweise auch offen ausgeführt sein, das heißt, die Holme 2 müssen keinen vollständigen Quader ausbilden. Fig. 1 zeigt ein Rahmengestell 1 mit zwei identischen Seitenteilen 3, welche aus fünf einzelnen Holmen 2 ausgebildet sind. Die Seitenteile 3 sind mittels eines Mittelteils 4 miteinander verbunden. Das Mittelteil 4 weist zwei parallel zueinander und positionsgleich übereinander angeordnete Querholme auf, welche durch im 90° dazu angeordnete Holme 2 voneinander beabstandet sind. Am vom Boden weiter entfernten Querholm sind parallel zum Boden angeordnete Holme 2 einer Oberseite eines Quaders entsprechend positioniert. An diesen Holmen 2 oder jedem anderen Holm 2 können unter anderem Funktionssegmente 5 platziert werden.

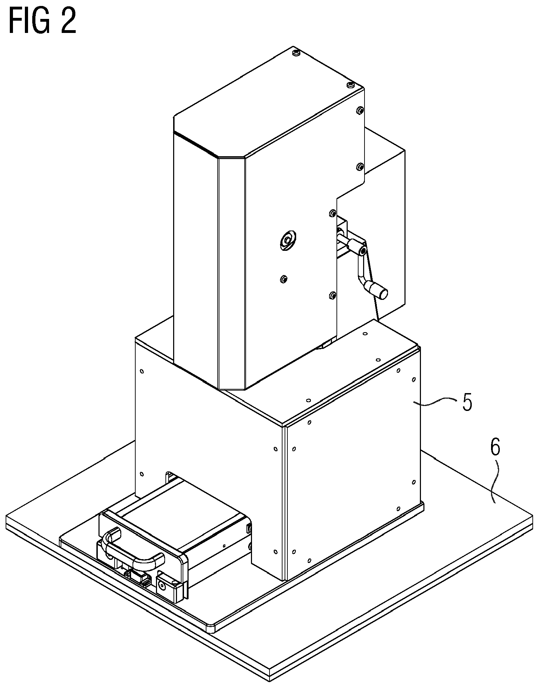

In Fig. 2 ist ein erfindungsgemäßes Funktionssegment 5 dargestellt. Das Funktionssegment 5 kann auf einer Plattform 6 mit einer definierten Größe montiert sein, so dass bei einem automatisierten Austausch dieses Funktionssegments 5 die Greifarme eines Transportwagens wissen, welchen Abstand sie einnehmen müssen, um das Funktionssegment aufzunehmen. Das Funktionssegment 5 kann ein manuell zu betreibendes Funktionssegment 5 sein oder eines für einen automatisierten Fertigungsschritt.

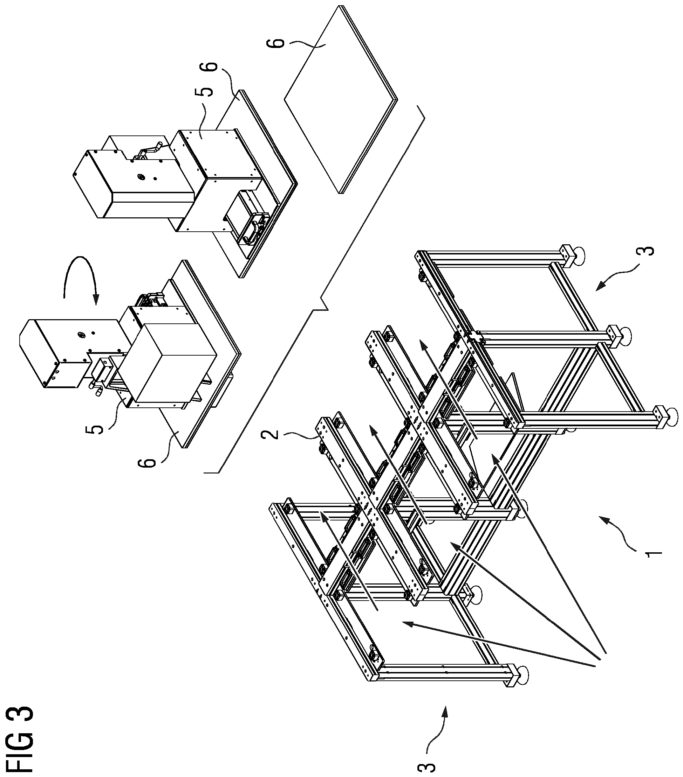

Fig. 3 zeigt ein Rahmengestell 1, welchem zwei unterschiedliche Funktionssegmente 5 zugeführt werden. Das dargestellte Rahmengestell 1 entspricht einem Quader mit offenen Seitenteilen. Auf der Oberseite des Quaders sind Holme 2 voneinander beabstandet und parallel zueinander angeordnet, welche die Funktionssegmente 5 aufnehmen können. Die Holme 2 können dafür z. B. als Führungsschienen ausgebildet sein, in welche die Plattformen 6 der Funktionssegmente 5 eingeschoben und mittels einer Verriegelung fest positioniert werden.

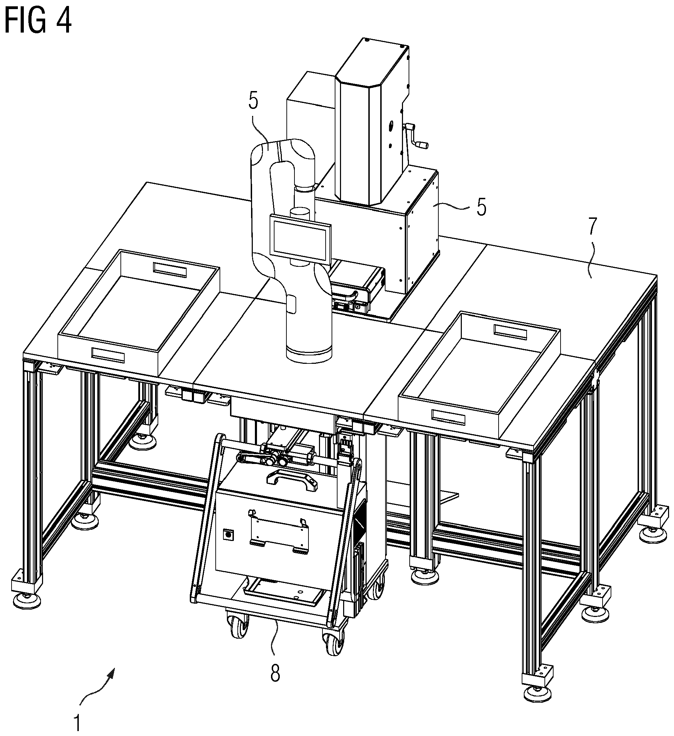

In Fig. 4 ist ein für einen automatisierten Prozess ausgebildetes Funktionssegment 5 fixiert am Rahmengestell 1 dargestellt. Das Rahmengestell 1 ist derart ausgeführt, dass es auch einfache Platten 7, welche als Ablagefläche genutzt werden können, aufnehmen kann. Die Stellfläche unterhalb des Rahmengestells 1 kann beispielsweise dazu genutzt werden, einen mobilen Transportwagen 8, welcher dem Rahmengestell 1 die Funktionssegmente 5 zuführt, zu parken.

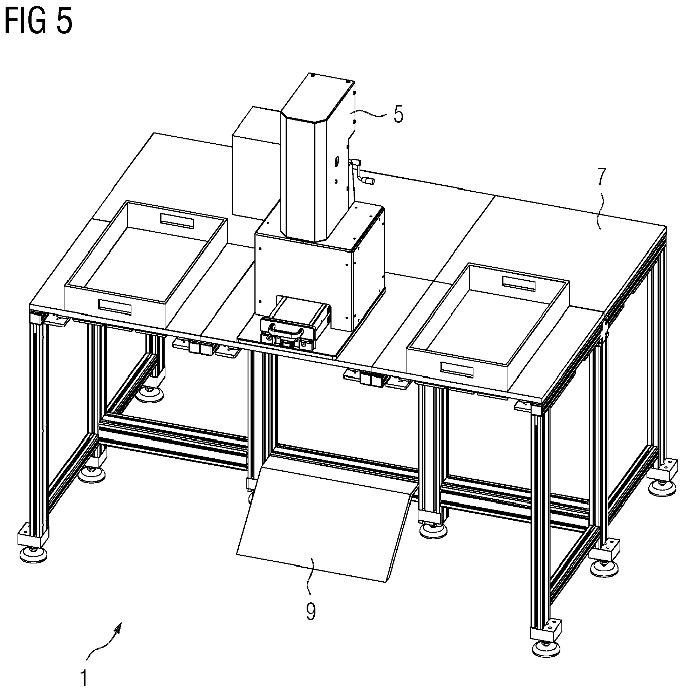

Fig. 5 zeigt ein für einen manuell zu betreibenden Fertigungsschritt ausgebildetes Funktionssegment 5 fixiert am Rahmengestell 1. Das Rahmengestell 1 kann für den Fall einer manuellen Fertigung so ausgebildet sein, dass unterhalb des Rahmengestells 1 ein Pedal 9 für eine Fußbedienung angeschlossen werden kann.

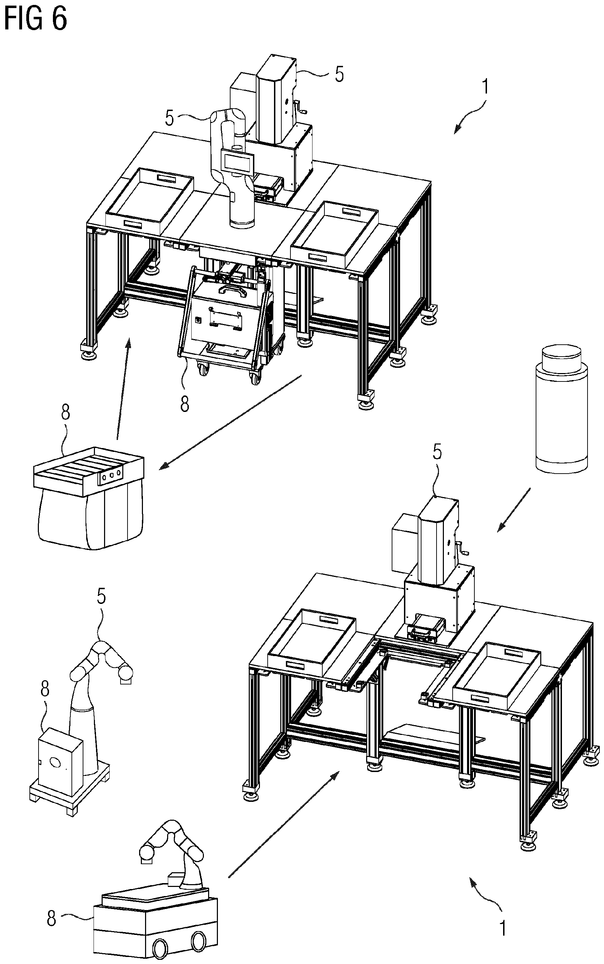

In Fig. 6 ist ein mobiler Austausch von Funktionssegmenten 5 mit zwei Rahmengestellen 1 dargestellt. Die mobilen Transportwagen 8 können unterschiedlich ausgeführt sein. Wesentlich ist nur, dass sie die Position und die Maße des auszutauschenden Funktionssegments 5 kennen. Die Rahmengestelle 1 sind von allen Seiten für die Transportwagen 8 zugänglich.

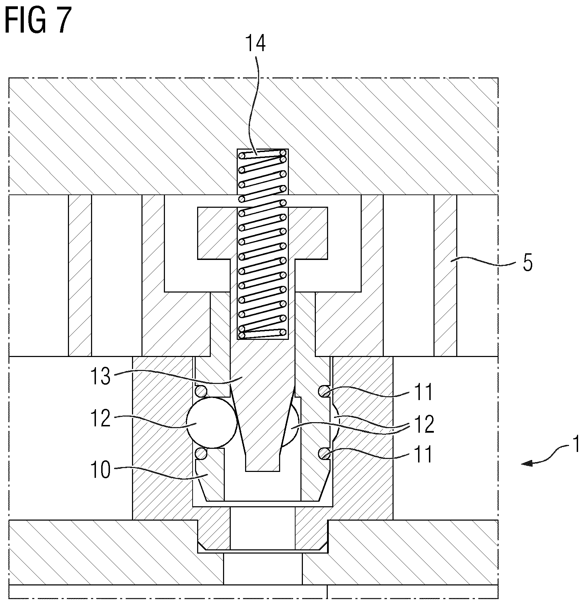

Fig. 7 zeigt eine mögliche Ausführungsform für eine Verriegelungsvorrichtung für die Funktionssegmente 5 am Rahmengestell 1. Es kann vorgesehen ein, dass zum Ver- und Entriegeln des Funktionssegments 5 am Rahmengestell 1 je Funktionssegment 5 zwei oder vier Buchsen 10 mit Innenrille 11 am Rahmengestell 1 angeordnet sind und am Funktionssegment 5 zwei Dorne montiert sind. Die Anzahl der Buchsen kann variieren. Bei einem Funktionssegment mit n-Ecken können es auch n Buchsen sein. Jeder Dorn enthält drei innenliegende Kugeln 13 und einen Kegeldorn 13. Wenn das Funktionssegment 5 abgesengt wird, werden die zwei Kegeldorne 13 durch eine Druckfeder 14 weiterbewegt und drücken die Kugeln 13 in die Innenrille 11 der Buchsen 10. Beim Entriegeln wird das Funktionssegment 5 angehoben, d.h., als erstes wird der Kegeldorn 13 angehoben. Dadurch rollen die Kugeln 12 aus der Innenrille 11 zum Kegeldorn 13. Auf diese Weise wird das Funktionssegment 5 entriegelt und kann mit einem Hub eines mobilen Transportwagens entfernt werden.

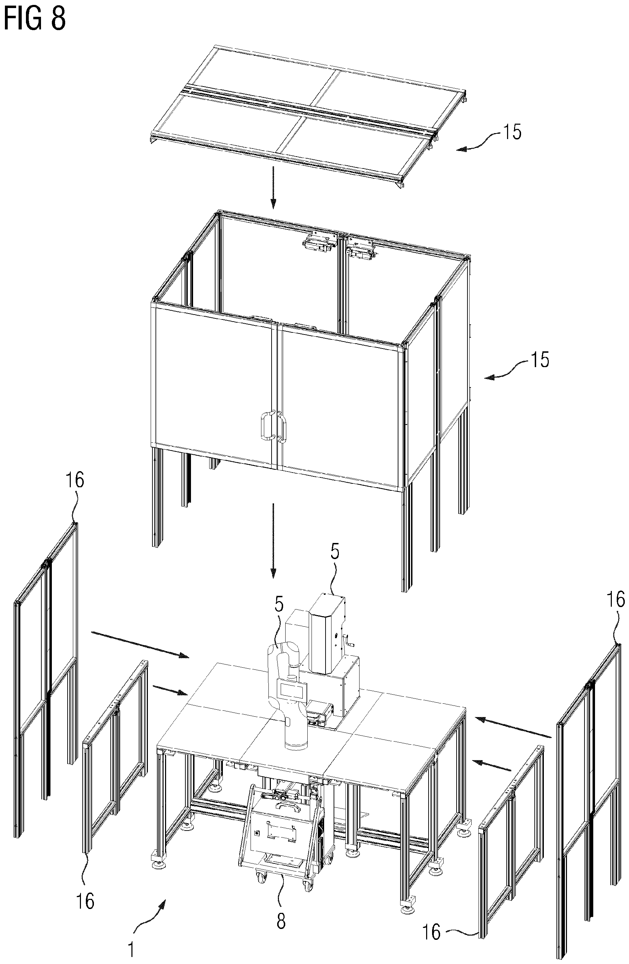

In Fig. 8 ist eine individuell anzupassende und zu ergänzende Schutzvorrichtung 15 für Fertigungsschritte dargestellt, welche mit besonderer Vorsicht durchgeführt werden müssen. Wie aus der Fig. 8 hervorgeht, kann das Rahmengestell 1 mit zusätzlichen Schutzwänden 16 ergänzt werden, welche beispielsweise an den entsprechenden Seitenteilen des Rahmengestells 1 fixiert werden können. Diese Schutzvorrichtung 15 ist modular ausgeführt und kann einsprechend einem Baukastensystem beliebig erweitert werden.

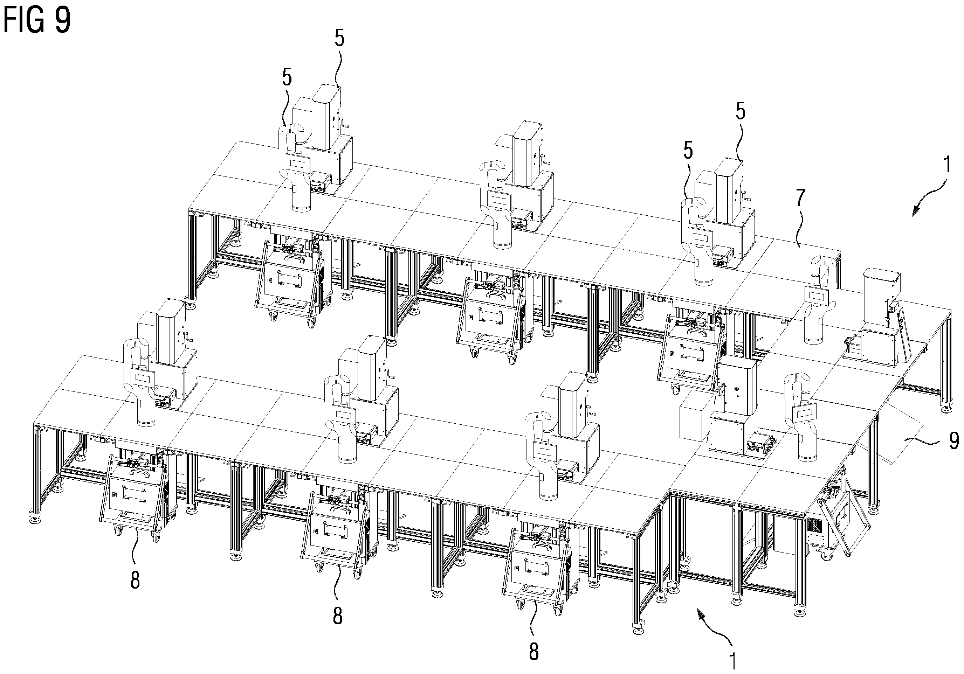

Fig. 9 zeigt eine aus einzelnen, ortsunabhängigen Fertigungsplattformen aufgebaute Fertigungsstraße. Der Aufbau einer Fertigungsstraße kann in jeder beliebigen Form, also U-, S- oder Ähnliches, ausgeführt sein.

Die erfindungsgemäße ortsunabhängige Fertigungsplattform sowie die Verfahren zeichnen sich dadurch, dass die Fertigungsplattform sehr individuell aufzubauen und mit Funktionssegmenten zu bestücken ist und hinsichtlich des durchzuführenden Fertigungsprozesses sowohl manuell als auch automatisiert als auch teilweise manuell und teilweise automatisiert zu betreiben ist.

### Bezugszeichenliste

- 1: Rahmengestell
- 2: Holm
- 3: Seitenteil
- 4: Mittelteil
- 5: Funktionssegment
- 6: Plattform
- 7: Platte
- 8: Transportwagen
- 9: Pedal
- 10: Buchse
- 11: Innenrille
- 12: Kugel
- 13: Kegeldorn
- 14: Druckfeder
- 15: Schutzvorrichtung
- 16: Schutzwand

## Patentansprüche

1. Ortsunabhängige Fertigungsplattform für die Herstellung von Produkten mittels eines definierten Fertigungsprozesses mit:
- mindestens einem Funktionssegment (5), welches derart ausgebildet ist, dass es einen definierten Fertigungsschritt innerhalb eines Herstellungsprozesses für ein Produkt umsetzt;
- mit einem Rahmengestell (1), am welchem das Funktionssegment (5) positioniert ist und
- mit einer Steuer- und Auswerteeinheit, welche derart ausgebildet ist, dass sie das Funktionssegment (5) erkennt und den dafür hinterlegten Fertigungsschritt zu einem bestimmten Zeitpunkt des Fertigungsprozesses abruft.

2. Ortsunabhängige Fertigungsplattform nach Anspruch 1, **dadurch gekennzeichnet, dass** die Steuer - und Auswerteeinheit eine Kommunikationsschnittstelle aufweist, wobei die Kodierung des jeweiligen Funktionssegments (5) mittels eines Kommunikationsprotokolls, welches in der Steuer- und Auswerteeinheit und im jeweiligen Funktionssegment (5) hinterlegt ist, übermittelt wird.

3. Ortsunabhängige Fertigungsplattform nach Anspruch 1, **dadurch gekennzeichnet, dass** die Steuer- und Auswerteeinheit eine Datenübertragungsschnittstelle aufweist, welche in Form eines optischen 2D- oder 3D-Sensors mit anschließender Datenübertragung ausgebildet ist, oder welche in Form einer Bluetooth-Schnittstelle ausgebildet ist, oder welche in Form einer RFID-Schnittstelle ausgebildet ist, oder welche in Form eines Scanners, welcher einen Code am Funktionssegment (5) liest, mit anschließender Datenübertragung ausgebildet ist, oder welche in Form einer kodierten Kontaktierung an der Schnittstelle zwischen Funktionssegment (5) und Steuer- und Auswerteeinheit mit anschließender Datenübertragung ausgebildet ist.

4. Ortsunabhängige Fertigungsplattform nach einem der Ansprüche 1 bis 3, **dadurch gekennzeichnet, dass** die ortsunabhängige Fertigungsplattform derart mit Funktionssegmenten (5) bestückt ist, dass ein komplett manuell zu betreibender Fertigungsprozess durchzuführen ist oder ein komplett mittels der Steuer- und Auswerteeinheit geführter automatisierter Fertigungsprozess oder ein teilweise manuell und teilweise automatisiert geführter Fertigungsprozess durchzuführen ist.

5. Ortsunabhängige Fertigungsplattform, nach einem der Ansprüche 1 bis 4, **dadurch gekennzeichnet, dass** das Rahmengestell (1) aus einzelnen Holmen (2) ausgebildet ist, welche in einem individuell ausgebildeten modularem Aufbaukonzept angeordnet sind, wobei die Holme (2) regelmäßig und unregelmäßig angeordnete Schnittstellen zum Ineinanderfügen aufweisen.

6. Ortsunabhängige Fertigungsplattform nach einem der Ansprüche 1 bis 5, **dadurch gekennzeichnet, dass** die ortsunabhängige Fertigungsplattform als Einzelarbeitsplatz oder in Form einer modular aufgebauten Fertigungsstraße ausgebildet ist.

7. Ortsunabhängige Fertigungsplattform nach einem der Ansprüche 1 bis 6, **dadurch gekennzeichnet, dass** der mittels des Funktionssegments (5) auszuführende Fertigungsschritt in Form einer Prüfeinheit, einer Montageeinheit, einer Füge- und Verbindungseinheit, einer Zuführ- oder Wegführeinheit, einer Presseinheit oder Löteinheit oder in einer ausgewählten Kombination dieser Funktionen ausgebildet ist.

8. Ortsunabhängige Fertigungsplattform nach einem der Ansprüche 1 bis 7, **dadurch gekennzeichnet, dass** sowohl am Rahmengestell (1) als auch an den jeweiligen Funktionssegmenten (5) Schnittstellen ausgebildet sind, welche derart ausgebildet sind, dass das jeweilige Funktionssegment (5) am Rahmengestell (1) zu befestigen und zu verriegeln ist.

9. Ortsunabhängige Fertigungsplattform nach einem der Ansprüche 1 bis 8, **dadurch gekennzeichnet, dass** die ortunabhängige Fertigungsplattform entweder eine fest positionierte Schutzvorrichtung (16) aufweist oder Schnittstellen aufweist, um die ortsunabhängige Fertigungsplattform mit einer Schutzvorrichtung (16) zu erweitern.

10. Ortsunabhängige Fertigungsplattform nach einem der Ansprüche 1 bis 9, **dadurch gekennzeichnet, dass** die jeweiligen Funktionssegmente (5) manuell auszutauschen sind oder eine Schnittstelle aufweisen, um einen automatisierten Austausch durchzuführen.

11. Ortsunabhängige Fertigungsplattform nach einem der Ansprüche 1 bis 10 **dadurch gekennzeichnet, dass** die Steuer- und Auswerteeinheit entweder dezentral an einem Funktionssegment (5) angeordnet ist oder zentral am Rahmengestell (1) der ortsunabhängigen Fertigungsplattform oder übergeordnet weder am Rahmengestell (1) noch an einem Funktionssegment (5).

12. Verfahren zur Herstellung von Produkten über einen definierten Fertigungsprozess mittels einer ortsunabhängigen Fertigungsplattform nach einem der Ansprüche 1 bis 11 mit den Schritten:
- Montage eines Funktionssegments (5) oder einer Mehrzahl an Funktionssegmenten (5) an einem Rahmengestell (1);
- Übertragung von Informationen zur Kodierung des jeweiligen Funktionssegments (5) an eine Steuer- und Auswerteeinheit;
- Zuordnen der Kodierung des jeweiligen Funktionssegments (5) zu einem definierten Fertigungsschritt durch die Steuer- und Auswerteeinheit;
- Ableiten eines Fertigungsprozesses mittels der zuvor mit Fertigungsprozessen programmierten Steuer- und Auswerteeinheit;
- Ansteuern des jeweiligen Funktionssegments (5) durch die Steuer- und Auswerteeinheit für die Ausführung des Fertigungsprozesses.

13. Verfahren zur Herstellung von Produkten über einen definierten Fertigungsprozess mittels einer ortsunabhängigen Fertigungsplattform nach einem der Ansprüche 1 bis 11 mit den Schritten:
- Programmieren einer Steuer- und Auswerteeinheit mit einer Mehrzahl an Fertigungsprozessen;
- Abfragen der Funktionen eines angeschlossenen Funktionssegments (5) oder einer Mehrzahl an Funktionssegmenten (5) mittels der Steuer- und Auswerteeinheit;
- Ansteuern der jeweiligen ausgewählten Funktionssegmente (5) durch die Steuer- und Auswerteeinheit gemäß dem Fertigungsprozess.

14. Verfahren nach Anspruch 12 oder 13, **dadurch gekennzeichnet, dass** das Ermitteln des jeweiligen Funktionssegments (5) mittels eines Kommunikationsprotokolls durchgeführt wird, welches in der Steuer- und Auswerteeinheit und im jeweiligen Funktionssegment (5) hinterlegt ist.

15. Verfahren nach Anspruch 13, **dadurch gekennzeichnet, dass** das Ermitteln des jeweiligen Funktionssegments (5) mittels einer Datenübertragungsschnittstelle durchgeführt wird, wobei mittels eines optischen 2D- oder 3D-Sensors Messwerte generiert werden und anschließend an die Steuer- und Auswerteeinheit übertragen und von dieser ausgewertet werden, oder wobei mittels einer Bluetooth-Schnittstelle Messwerte an die Steuer- und Auswerteeinheit übertragen und von dieser ausgewertet werden, oder wobei mittels einer RFID-Schnittstelle Messwerte an die Steuer- und Auswerteeinheit übertragen und von dieser ausgewertet werden, oder wobei mittels eines Scanners Messwerte generiert werden und anschließend an die Steuer- und Auswerteeinheit übertragen und von dieser ausgewertet werden, oder wobei mittels einer kodierten Kontaktierung an der Datenübertragungsschnittstelle Daten generiert werden und anschließend an die Steuer- und Auswerteeinheit übertragen und von dieser ausgewertet werden.
